# EUROPÄISCHE PATENTSCHRIFT

(11) **EP 1 564 985 B1**
(45) Veröffentlichungstag und Bekanntmachung des Hinweises auf die Patenterteilung: **20.01.2010**
(21) Anmeldenummer: 05090004.2
(22) Anmeldetag: 12.01.2005
(51) Int. Cl.: H04N 1/48

(54) **Vorrichtung zur digitalen Abtastung von farbigen Bildvorlagen**
Apparatus for digitally scanning colour documents
Appareil de balayage numérique des documents en couleurs

(30) Priorität: 13.02.2004 DE 102004007911
(43) Veröffentlichungstag der Anmeldung: 17.08.2005
(73) Patentinhaber: Deutsches Zentrum für Luft- und Raumfahrt e.V., 51147 Köln (DE)
(72) Erfinder: Eckardt, Andreas, Dr.-Ing, 12524 Berlin (DE)
(74) Vertreter: Patentanwälte Bressel und Partner

(56) Entgegenhaltungen:
- EP-A2- 0 796 005
- JP-A- 5 076 005
- JP-A- 2004 007 625
- US-A- 4 264 921
- US-A- 5 061 036
- US-A- 5 101 266
- US-A- 5 646 683

## Beschreibung

Die Erfindung betrifft eine Vorrichtung zur digitalen Abtastung von farbigen Bildvorlagen gemäß dem Oberbegriff des Anspruchs 1.

Die derzeit bekannten Vorrichtungen zur digitalen Abtastung von Bildvorlagen arbeiten nach zwei grundlegenden Prinzipien. Entweder wird die zu digitalisierende Bildvorlage mit einer Weißlichtquelle beleuchtet, wobei anschließend eine Farbtrennung, beispielsweise mittels Strahlteilen und Farbfiltern, stattfindet oder die Beleuchtung findet schon in den Spektralfarben Rot, Grün und Blau statt, wobei der photosensitive Sensor monochrom sein kann. Nachteilig an allen bekannten Verfahren ist, dass diese ein zur Abtastgeschwindigkeit indirekt proportionales Signal zum Rauschverhältnis aufweisen.

Zur Verbesserung des Signal/Rauschverhältnisses sind TDI-Sensoren bekannt. Diese weisen eine Vielzahl von Zeilen auf, die quer zur Bewegungsrichtung der Bildvorlage ausgerichtet sind und deren Schiebetakte mit der Bewegung synchronisiert sind. Dabei wird anschaulich ein Bildstreifen auf der ersten Zeile abgebildet und abgetastet. Synchronisiert zur Bildbewegung wird das Ergebnis der ersten Zeile in die zweite Zeile geschoben und der Bildstreifen erneut abgetastet und so weiter. Hierdurch kann das Signal-Rauschverhältnis erheblich verbessert werden. Allerdings bedingt das TDI-Prinzip, dass für farbige Bildvorlagen drei separate Sensoren verwendet werden müssen. Dies wiederum ist relativ aufwendig.

Aus der EP 0 796 005 A2 ist eine Vorrichtung zur digitalen Abtastung von farbigen Bildvorlagen bekannt, umfassend mindestens einen photosensitiven Sensor, der relativ zur Bildvorlage bewegbar ist, wobei die Bewegung zur Abtastung synchronisiert ist, und eine Lichtquelle, wobei der photosensitive Sensor als TDI-Sensor ausgebildet ist, wobei die Lichtquelle derart ausgebildet ist, dass diese nebeneinanderliegende RGB-Lichtstreifen erzeugt, wobei die Lichtstreifen quer zu den Zeilen des TDI-Sensors verlaufen. Die Lichtquelle ist dabei als Weißlichtquelle ausgebildet, wobei vor dem Sensor ein entsprechend strukturierter RGB-Farbfilter angeordnet ist.

Der Erfindung liegt daher das technische Problem zugrunde, eine Vorrichtung zur digitalen Abtastung von farbigen Bildvorlagen zu schaffen, mittels derer ein verbessertes Signal/Rauschverhältnis mit einer geringen Anzahl von photosensitiven Sensoren möglich ist.

Hierzu ist der photosensitive Sensor als TDI-Sensor ausgebildet, wobei die Lichtquelle derart ausgebildet ist, dass diese nebeneinanderliegende RGB-Lichtstreifen erzeugt, wobei jeweils ein Lichtstreifen eine Zeile des TDI-Sensors beleuchtet und die Farbe der Lichtstreifen, synchronisiert zu den Schiebetakten der Zeilen des TDI-Sensors, in der Reihenfolge RGB umschaltbar ist. Hierdurch kann mittels eines panchromatischen TDI-Sensors ein RGB-Bild erzeugt werden, das ein wesentlich besseres Signal/Rauschverhältnis aufweist.

In einer bevorzugten Ausführungsform ist die Lichtquelle als LED-Matrix ausgebildet, mittels derer streifenförmige R, G, und B-Lichtstreifen erzeugt werden können. Dabei werden vorzugsweise Tripel-Anordnungen je Streifen von R-, G- und B-LEDs wechselweise angesteuert. Denkbar wäre jedoch eine statische Einstellung von R-, G- und B-Streifen, wobei die LED-Matrix synchronisiert zu den Schiebetakten der TDI-Zeilen bewegt wird. Der Vorteil der wechselweisen Ansteuerung der Tripel-Anordnung ist jedoch, dass keine Massen bewegt werden müssen. Vorzugsweise sind eine Vielzahl derartiger Tripel-LEDs entlang einer TDI-Zeile als Matrix angeordnet.

In einer alternativen Ausführungsform ist die Lichtquelle als Weißlichtquelle mit nachgeschalteter Farb-LCD-Matrix ausgebildet, wobei die Durchlässigkeit der Matrix wechselweise synchronisiert zu den Schiebetakten der TDI-Zeilen umgeschaltet wird.

Vorzugsweise erfolgt nach vollständiger Abtastung über alle TDI-Zeilen noch eine Phasenkorrektur, um Ortsverschiebungen zu kompensieren. Diese Verschiebungen treten dadurch auf, dass durch die Bewegung jeweils ein Teil des Bildes bereits in den benachbarten Farbkanal wandert.

Vorzugsweise ist zwischen der Lichtquelle und der Bildvorlage ein Objektiv angeordnet, mittels dessen die Lichtstreifen auf der Bildvorlage abgebildet werden.

In einer weiteren bevorzugten Ausführungsform ist die Vorrichtung mit einer Filmbühne ausgebildet, über die die Bildvorlage bewegbar ist, wobei die Filmbühne einen spaltförmigen Lichtdurchlass aufweist.

In einer weiteren bevorzugten Ausführungsform ist zwischen der Filmbühne und dem TDI-Sensor ein Objektiv angeordnet, mittels dessen die durchleuchtete Bildvorlage auf dem TDI-Sensor bzw. dessen Zeilen abgebildet wird.

Die Erfindung wird nachfolgend anhand eines bevorzugten Ausführungsbeispieles näher erläutert. Die Fig. zeigen:
- Fig. 1: eine schematische Teilansicht auf einen TDI-Sensor,
- Fig. 2: eine schematische Darstellung einer Vorrichtung mit LCD-Matrix und
- Fig. 3: eine schematische Darstellung einer Vorrichtung mit LED-Matrix.

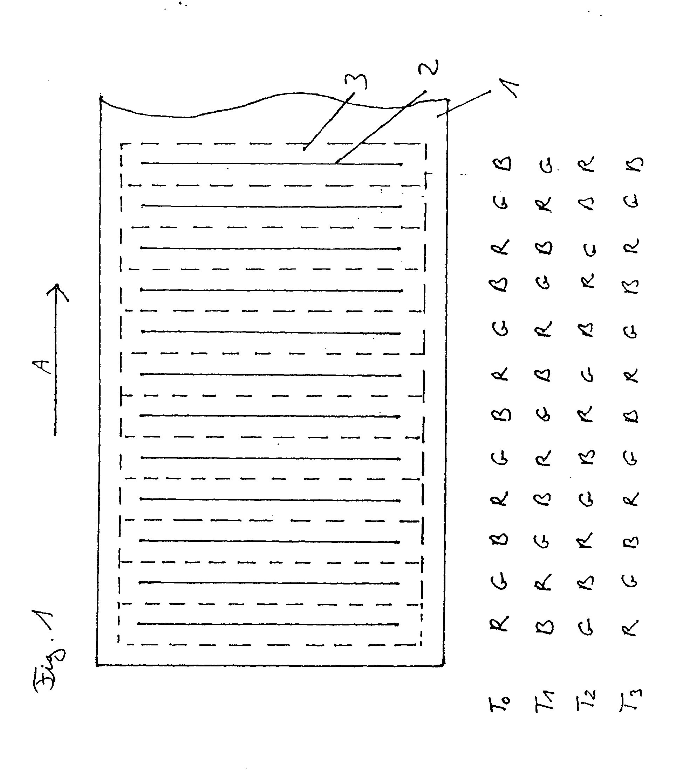

In der Fig. 1 ist schematisch ein TDI-Sensor 1 mit TDI-Zeilen 2 dargestellt. Dabei werden die akkumulierten Ladungen einer TDI-Zeile 2 synchron taktweise von links nach rechts verschoben. Gestrichelt über TDI-Zeilen 2 sind Lichtstreifen 3 dargestellt. Dabei sei angemerkt, dass die TDI-Zeilen 2 nahezu ohne Abstand ausgebildet sein können, wohingegen sich die Lichtstreifen nicht berühren müssen, solange diese nur die jeweilige Zeile abdecken. Zu einem Zeitpunkt T₀ liegt dabei die eingezeichnete Verteilung von Lichtstreifen 3 vor. Nach einem Schiebetakt der TDI-Zeilen 2 zum Zeitpunkt T₁ liegt eine jeweils um eine Farbstufe nach rechts verschobene Lichtstreifen-Verteilung vor. Dadurch wird der Bildstreifen, den beispielsweise die erste TDI-Zeile 2 zum Zeitpunkt T₀ sieht, stets zu allen Zeitpunkten rot beleuchtet. Anschaulich kann man sagen, dass so wie sich ein Bildstreifen in Richtung A bewegt der zugehörige Lichtstreifen 3 sich mitbewegt.

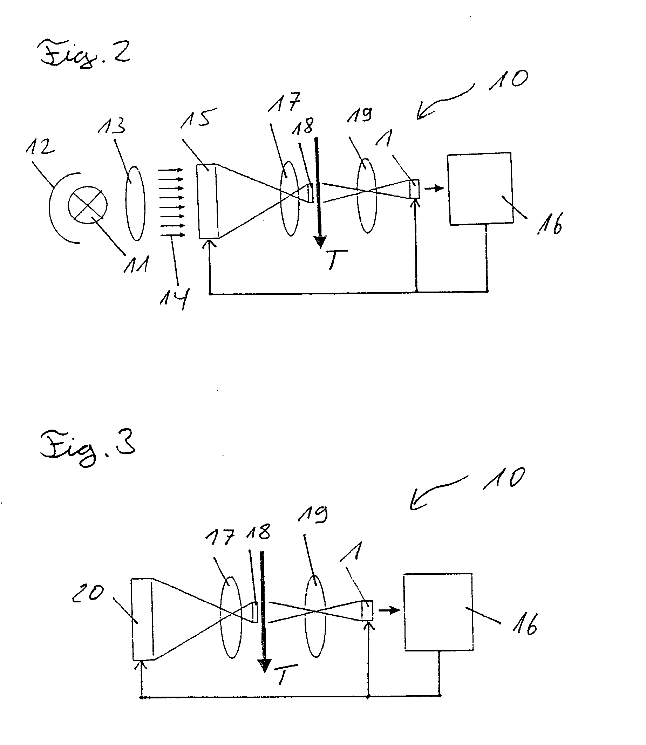

In der Fig. 2 ist schematisch die Vorrichtung 10 dargestellt, umfassend eine Weißlichtquelle 11 mit Parabolreflektor 12 und einem ersten Objektiv 13 zur Erzeugung parallelen weißen Lichtes 14. Das parallele weiße Licht 14 trifft auf eine LCD-Matrix 15, die von einer Steuerelektronik 16 synchron zu den Schiebetakten des TDI-Sensors 1 angesteuert wird, wobei sich die Farbe einer Spalte der LCD-Matrix 15 jeweils in der Reihenfolge RGB ändert. Über eine weitere Optik 17 werden die Lichtstreifen auf eine sich in Richtung T bewegende Bildvorlage 18, beispielsweise einen Film, abgebildet. Dieser belichtete Bildausschnitt wird mit dem verschiedenfarbig beleuchteten Lichtstreifen mittels einer weiteren Optik 19 auf die einzelnen Zeilen des TDI-Sensors 1 abgebildet. Dabei wird synchron der Lichtstreifen durch Ansteuerung der LCD-Matrix 15 mit den Schiebetakten der TDI-Zeilen gewechselt.

In der Fig. 3 ist eine alternative Ausführungsform dargestellt, wobei als Lichtquelle eine LED-Matrix 20 verwendet wird, die in Abhängigkeit von der Steuerelektronik wechselweise R-, G- und B-Lichtstreifen erzeugen kann. Dabei werden wie bei der Ausführungsform gemäß Fig. 2 so viele Lichtstreifen wie TDI-Zeilen vorhanden sind erzeugt, die sich räumlich nach dem Muster RGB und zeitlich nach dem Muster RBG im Schiebetakt der TDI-Zeilen ändern.

## Patentansprüche

1. Vorrichtung zur digitalen Abtastung von farbigen Bildvorlagen, umfassend mindestens einen photosensitiven Sensor, der relativ zur Bildvorlage bewegbar ist, wobei die Bewegung zur Abtastung synchronisiert ist, und mindestens eine Lichtquelle, wobei
der photosensitive Sensor als TDI-Sensor (1) ausgebildet ist, **dadurch gekennzeichnet, dass** die Lichtquelle derart ausgebildet ist, dass diese nebeneinanderliegende RGB-Lichtstreifen (3) erzeugt, wobei jeweils ein Lichtstreifen (3) eine Zeile (2) des TDI-Sensors (1) beleuchtet und die Farbe der Lichtstreifen (3) synchronisiert zu den Schiebetakten der Zeilen (2) des TDI-Sensors (1) in der Reihenfolge RGB umschaltbar ist.

2. Vorrichtung nach Anspruch 1, **dadurch gekennzeichnet, dass** die Lichtquelle als LED-Matrix (20) ausgebildet ist.

3. Vorrichtung nach Anspruch 1, **dadurch gekennzeichnet, dass** die Lichtquelle als Weißlichtquelle (11) mit nachgeschalteter Farb-LCD-Matrix (15) ausgebildet ist.

4. Vorrichtung nach einem der vorangegangenen Ansprüche, **dadurch gekennzeichnet, dass** die ermittelten Farbwerte einer Phasenkorrektur unterworfen werden.

5. Vorrichtung nach einem der vorangegangenen Ansprüche, **dadurch gekennzeichnet, dass** zwischen der Lichtquelle und der Bildvorlage ein Objektiv (17) angeordnet ist.

6. Vorrichtung nach einem der vorangegangenen Ansprüche, **dadurch gekennzeichnet, dass** die Bildvorlage (18) über eine Filmbühne bewegbar ist, in der ein spaltförmiger Lichtdurchlass angeordnet ist.

7. Vorrichtung nach Anspruch 6, **dadurch gekennzeichnet, dass** zwischen der Filmbühne und dem TDI-Sensor (1) ein Objektiv (19) angeordnet ist.

## Claims

1. Device for digitally scanning colour originals, comprising at least one photosensitive sensor, which is moveable in relation to the original, the movement being synchronised with the scanning, and at least one light source, the photosensitive sensor being in the form of a TDI-sensor (1), **characterised in that** the light source is designed in such a way that it generates successive RGB light strips (3), wherein one light strip (3) illuminates one line (2) of the TDI-sensor (1) respectively and the colour of the light strips (3) can be switched in synchronism with the displacement rate of the lines (2) of the TDI-sensor (1) in the sequence RGB.

2. Device according to claim 1, **characterised in that** the light source is in the form of an LED-matrix (20).

3. Device according to claim 1, **characterised in that** the light source is in the form of a white light source (11) with a colour LCD matrix (15) connected in series.

4. Device according to one of the preceding claims, **characterised in that** the colour values determined are subjected to a phase correction.

5. Device according to one of the preceding claims, **characterised in that** an objective (17) is arranged between the light source and the original.

6. Device according to one of the preceding claims, **characterised in that** the original (18) can be moved via a film gate in which a slot-shaped light passage is arranged.

7. Device according to claim 6, **characterised in that** an objective (19) is arranged between the film gate and the TDI-sensor (1).

## Revendications

1. Dispositif de balayage numérique de modèles d'image en couleur, comportant au moins un capteur photosensible, lequel peut être déplacé par rapport au modèle d'image, le mouvement étant synchronisé pour le balayage, et au moins une source lumineuse,
le capteur photosensible étant réalisé comme un capteur TDI (1), **caractérisé en ce que** la source lumineuse est réalisée de sorte qu'elle génère des bandes lumineuses RGB (3) situées les unes à côté des autres, chaque bande lumineuse (3) éclairant une ligne (2) du capteur TDI (1) et synchronisant la couleur de la bande lumineuse (3) en fonction du rythme de déplacement de la ligne (2) du capteur TDI (1), dans laquelle la séquence RGB peut être commutée.

2. Dispositif selon la revendication 1, **caractérisé en ce que** la source lumineuse est réalisée comme une matrice LED (20).

3. Dispositif selon la revendication 1, **caractérisé en ce que** la source lumineuse est réalisée comme une source de lumière blanche (11) avec une matrice LCD de couleur (15) intercalée à la suite.

4. Dispositif selon l'une quelconque des revendications précédentes, **caractérisé en ce que** les valeurs de couleur déterminées sont soumises à une correction de phase.

5. Dispositif selon l'une quelconque des revendications précédentes, **caractérisé en ce qu'**un objectif (17) est disposé entre la source lumineuse et le modèle d'image.

6. Dispositif selon l'une quelconque des revendications précédentes, **caractérisé en ce que** le modèle d'image (18) peut être déplacé sur un presse-film, dans lequel un passage de lumière en forme de fente est disposé.

7. Dispositif selon la revendication 6, **caractérisé en ce qu'**un objectif (19) est disposé entre le presse-film et le capteur TDI (1).
